# EUROPÄISCHE PATENTSCHRIFT

(11) **EP 2 336 613 B1**
(45) Veröffentlichungstag und Bekanntmachung des Hinweises auf die Patenterteilung: **17.04.2019**
(21) Anmeldenummer: 10195402.2
(22) Anmeldetag: 16.12.2010
(51) Int. Cl.: F16K 1/30, F16K 31/08, F16K 31/46

(54) **Absperrventil für einen Kryotank**
Valve for a cryotank
Soupape pour un cryoréservoir

(30) Priorität: 18.12.2009 DE 102009059030
(43) Veröffentlichungstag der Anmeldung: 22.06.2011
(73) Patentinhaber: Bayerische Motoren Werke Aktiengesellschaft, 80809 München (DE); LUXEMBOURG PATENT COMPANY S.A., 7440 Lintgen (LU)
(72) Erfinder: Werner, Claus, 82008, Unterhaching (DE); Becker, Daniel, 54332, Wasserliesch (DE)
(74) Vertreter: Schmidt, Günter H. H.

(56) Entgegenhaltungen:
- EP-A2- 0 846 901
- EP-A2- 1 801 478
- US-A- 4 220 312
- US-A1- 2009 014 671

## Beschreibung

Die Erfindung betrifft ein Absperrventil für einen Behälter zur Speicherung von Kraftstoff als kondensiertes Gas, insbesondere für einen Kryotank, nach dem Oberbegriff des ersten Anspruchs. Solche Absperrventile werden unter anderem mit elektromagnetischen Aktuatoren als Linearantrieb zum Öffnen und Schließen ausgestattet.

Es ist zusätzlich bereits bekannt, Kraftfahrzeuge zum Beispiel mit Wasserstoff oder Erdgas anzutreiben und diesen Treibstoff als kondensiertes Gas in einem Behälter im Kraftfahrzeug zu speichern. Zu dieser verflüssigten Speicherung sind spezielle druckfeste Behälter notwendig, die aufgrund der tiefen Speichertemperaturen eine sehr gute Isolation besitzen sollten. Dabei ist bekannt, zur Vermeidung von Wärmeeintrag.aus der Umgebung, doppelwandige, vakuumisolierte Behälter zu verwenden. In einer Ausführungsform als Hochdruckbehälter liegt deren Betriebstemperaturbereich zwischen 30K und 358 K, bei regulärem Betriebsdruck zwischen 0 bar und 350 bar. Solche mobilen kryogenen Hochdruckspeicher besitzen nach derzeitigem Stand mindestens eine Entnahmeeinrichtung für den kryogen gespeicherten Kraftstoff, die mindestens aus einer Entnahmeleitung mit einem tanknah untergebrachten Absperrventil besteht.

Die EP 0 535 394 B1 beschreibt ein Magnetventil für tiefkalte verflüssigte Gase als Absperrventil für ein Entnahmesystem für Flüssigwasserstoff aus einem Speichertank. Eine Druckfeder übernimmt dort die Schließfunktion, während das Öffnen des Kryoventils durch Bestromung eines Spulenkörpers erfolgt, was bewirkt, dass zuerst ein Oberanker und dann ein Unteranker mit einem Verschlussorgan entgegen der Kraft der Druckfeder vom Ventilsitz weg bewegt werden. Sollte diese Druckfeder im Betrieb versagen, ist das Ventil nicht mehr geschlossen und der Tankinhalt mit der Entnahmeleitung verbunden.

Die EP 1 801 478 A2 beschreibt ein Absperrventil für einen Behälter für kryogen gespeicherten Kraftstoff das mittels Druckluft betätigt wird, was bei einer Anwendung im Kraftfahrzeug das Vorhandensein einer Druckluftanlage voraussetzt.

Außerdem beschreiben die EP-A-846 901 und die US-A-2009/0014671 entsprechende Absperrvorrichtungen für Druckbehälter zur Speicherung von tiefkalten Gasen. Bei der EP-A-846 901 ist ein Ventilgehäuse mittels eines angeflanschten Rohrs, das eine Ventilspindel umgibt, mit einer Halteplatte verbunden, die eine Betätigungseinrichtung des Ventils trägt. Die US-A-2009/0014671 beschreibt ein über einen Ventilkopf elektromagnetisch zu betätigendes Ventil bei dem ebenfalls ein Rohr mit innen liegender Ventilspindel als Übergangsteil den Ventilkopf mit einem Ventilgehäuse mit Sitzkörper verbindet.

Im Allgemeinen können mit Konzepten mit elektromagnetischem Ventilantrieb für die Verwendung im Zusammenhang mit tiefkalten Gasen im Kraftfahrzeug bei akzeptabler Anzugs- und Halteleistung nur vergleichsweise geringe Kräfte eines Schließelements, zum Beispiel einer Feder, überwunden werden. Durch die niedrigen zur Verfügung stehenden Dichtkräfte am Ventilsitz und den massiven Elastizitätsverlust aller bekannten Dichtungsmaterialien im kryogenen Bereich, weisen diese Ventile bei tiefkaltem Betrieb sehr schlechte interne Dichtheiten auf. Zudem steigt die Partikelempfindlichkeit aufgrund der Relevanz der sehr genauen Dichtungsoberflächen stark an und ein Einsatz von Filterelementen ist erforderlich, welche aber wiederum den Druckverlust im Entnahme- und Betankungsstrom deutlich erhöhen.

Aufgabe der vorliegenden Erfindung ist es, ein Absperrventil für einen Behälter zur Speicherung von Kraftstoff als kondensiertes Gas, insbesondere für einen Kryotank mit einem elektromagnetischen Aktuator bereitzustellen, das ohne spezielle für kryogene Anwendung gewöhnlich notwendige Dichtungselemente auskommt, sondern in dem Standarddichtelemente für Hochdruckanwendung zur Anwendung kommen können.

Die Aufgabe der Erfindung wird durch die Merkmale des Anspruchs 1 gelöst. Vorteilhafte Aus- und Weiterbildungen der Erfindung sind Inhalt der abhängigen Ansprüche.

Nach der Erfindung ist ein Absperrventil mit einem Aktuator zu dessen Betätigung für einen Behälter zur Speicherung von Kraftstoff als komprimiertes kryogenes oder kondensiertes Gas, insbesondere für einen Kryohochdrucktank, für einen mit kryogen gespeichertem Kraftstoff betreibbaren Verbraucher, insbesondere eine Brennkraftmaschine eines Kraftfahrzeugs, wobei der Behälter eine Entnahmeeinrichtung für den kryogen gespeicherten Kraftstoff besitzt, mindestens bestehend aus einer Entnahmeleitung mit dem Absperrventil, das ein unteres und ein oberes Ventilgehäuse besitzt, wobei zwischen diesen ein Übergangsteil zum Wärmeabbau vorhanden ist und im oberen Ventilgehäuse oder im Übergangsteil, am mit dem oberen Ventilgehäuse verbundenen Ende, ein Adapterstück eingefügt ist, das eine Dichtungseinrichtung enthält, die einen Gasaustritt vom unteren Ventilgehäuse her in die Umgebung oder in den Aktuator verhindert, dadurch gekennzeichnet, dass die Dichtungseinrichtung aus je zwei statischen und dynamischen Dichtungen mit dazwischen liegendem Hohlraum besteht.

Dadurch kann der Hohlraum auf Gasdichtheit überwacht werden, insbesondere durch einen Sensor, insbesondere indem Leckgas mittels einer Detektionsleitung aus dem Hohlraum heraus abgeführt werden kann, insbesondere in einen auf Gaskonzentration überwachten Raum, was die Funktionssicherheit des Absperrventils bezüglich Dichtheit besonders gewährleitet.

Eine Trennung des unteren Ventilgehäuses, also des kalten Ventilteils, vom oberen Ventilgehäuse, also vom warmen Aktuatorteil durch ein Adapterstück mit einer Dichtungseinrichtung hat den Vorteil, dass die dynamische und die statische Abdichtung des kalten Ventilteils einfach an das warme Ventilende verlegt werden kann. So sind keine kryogenen Dichtungsmaterialien, wie Faltenbälge, notwendig, es können Standardmaterialien für Hochdruck-Anwendung verwendet werden, was deutlich geringere resultierende Druckkräfte bewirkt. Es sind keine zusätzlichen Federsteifigkeiten der Bälge zu berücksichtigen, was die nötige Leistung des Aktuators geringer hält und der Verzicht auf eine geschweißte Faltenbalgeinheit stellt eine deutlich günstigere Lösung mit besserer Lebensdauer dar.

Eine bevorzugte Ausführung der Erfindung ist dadurch gekennzeichnet, dass die Dichtungseinrichtung Kunststoff- und/oder Gummidichtungen besitzt, die insbesondere O-Ringe sind, was eine besonders preiswerte und zuverlässige Abdichtungsart darstellt.

Eine vorteilhafte Ausführung der Erfindung zeichnet sich dadurch aus, dass eine erste und eine zweite dynamische Abdichtung gegen Gasaustritt, bestehend aus O-Ringen, zwischen Adapterstück und Aktuatorspindel eingebaut ist, wobei bei der ersten dynamischen Abdichtung der O-Ring durch einen Stützring und bei der zweiten dynamischen Abdichtung der O-Ring durch eine Buchse gegen Spaltextrusion gesichert ist. Eine noch bessere und zuverlässigere Abdichtung wie vorstehend wird erreicht, wenn zusätzlich die O-Ringe der beiden dynamischen Abdichtungen zwischen zwei im Adapterstück integrierte, die Aktuatorspindel führende Gleitlagerbuchsen eingebracht sind.

Bei weiteren vorteilhaften Ausführungen der Erfindung ist eine erste und eine zweite statische Abdichtung gegen Gasaustritt, bestehend jeweils aus einem O-Ring zwischen oberem Ventilgehäuse und Adapterstück eingebaut. Dabei ist weiterhin von Vorteil, wenn zwischen einer jeweils ersten und zweiten Barriere der dynamischen und der statischen Abdichtungen durch eine Detektionsleitung jeweils ein Hohlraum zwischen Aktuatorspindel und Adapterstück im Fall der beiden dynamischen Dichtungen und zwischen Adapterstück und oberem Ventilgehäuse im Fall der beiden statischen Dichtungen abgegriffen wird. So kann auf einfache Weise ein vorhandenes Detektionssystem, insbesondere durch mindestens einen Sensor in der Detektionsleitung, potentielle Leckagen der Abdichtungen erkennen.

Bei einer weiteren bevorzugten Ausführung der Erfindung besitzt das Absperrventil ein Verschlussorgan mit räumlich runder Oberfläche, insbesondere kugelförmiger Oberfläche, das so gegen einen Öffnungsquerschnitt eines rohrförmigen Ventilsitzes in Fortsetzung eines Einlasskanals für kryogen gespeicherten Kraftstoff gepresst wird, dass eine zu einem Auslasskanal hin gas- und flüssigkeitsdichte Verbindung zwischen Verschlussorgan und rohrförmigem Ventilsitz aufrechterhalten wird. Eine solche Ventilausführung ist vorteilhafterweise in kleiner Dimension auszuführen bei Gewährleistung einer zuverlässigen Funktion. Wenn dann zwischen Aktuatorspindel und Verschlussorgan ein mindestens Längskraft übertragendes inneres Rohr, insbesondere aus Kunststoff, als Koppelstange eingebracht ist, das innen und außen eine Wärmeübergang verhindernde Isoliereinrichtung besitzt, ist auf einfache Weise der mit Wasserstoff beaufschlagte, kalte Bereich des Ventils vom warmen Bereich des Ventils getrennt und wärmeisoliert. Diese thermische Abkopplung durch Isolation, auch der Koppelstange, macht es möglich, den Aktuator im warmen Bereich anzubinden. Der innere Teflon-Isolator der Koppelstange wirkt dabei auch als Stütze gegen Knicken der Koppelstange, deshalb können über die Aktuatorspindel und die Koppelstange vorteilhafterweise hohe Ventilkräfte auf den Ventilkolben übertragen werden. Durch die nicht starre Verbindung zwischen unterem Druckstück der Koppelstange und dem Ventilkolben, welcher sehr genau durch die beiden Gleitringe im unteren Ventilgehäuse geführt wird, wirken sich Achsversatz und Winkeltoleranzen von Koppelstange und Ventilkolben nur gering auf die Dichtfläche aus.

Eine weitere vorteilhafte Ausführung der Erfindung ist dadurch gekennzeichnet, dass die vom Aktuator auf die Koppelstange Kraft übertragende Aktuatorspindel aus einer hochfesten Legierung, insbesondere einer Nickel-Basislegierung, zum Beispiel Inconel 718, besteht.

Es ist natürlich auch möglich, dass die Entnahmeeinrichtung auch als Befülleinrichtung für kryogen gespeicherten Kraftstoff genutzt werden kann. Das macht den Tankaufbau besonders einfach.

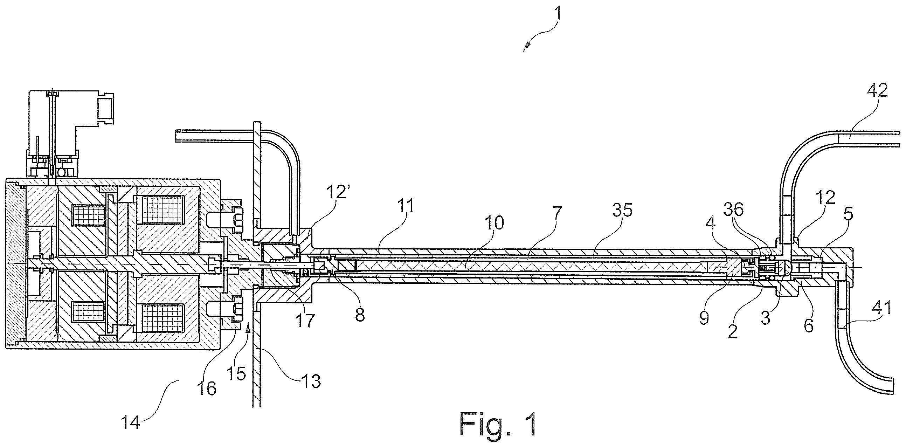

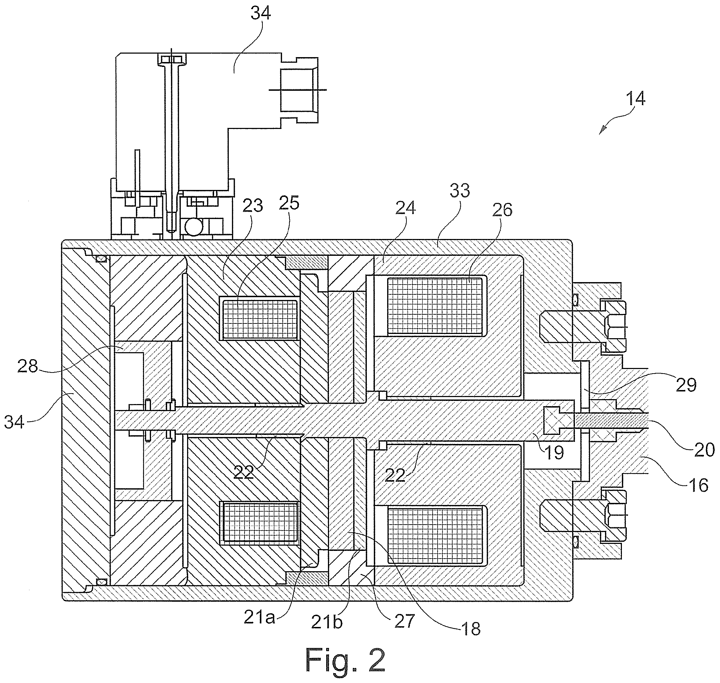

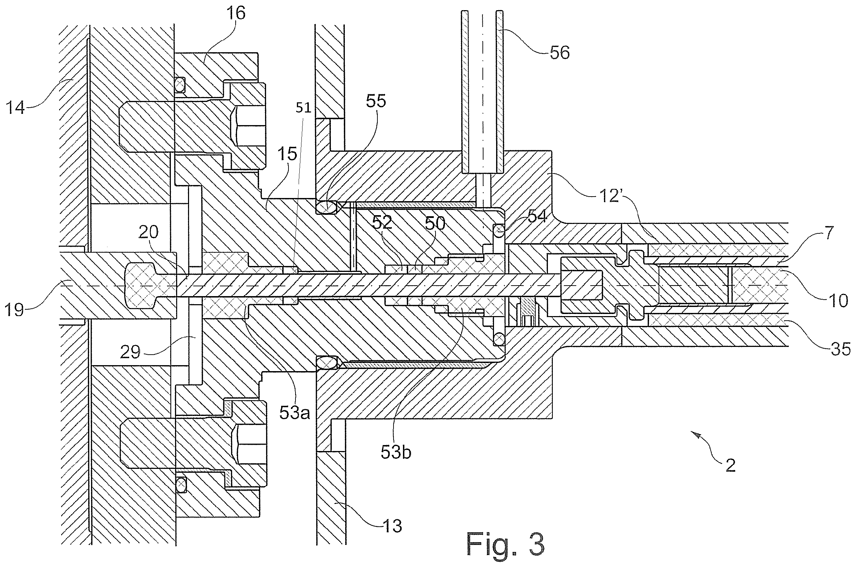

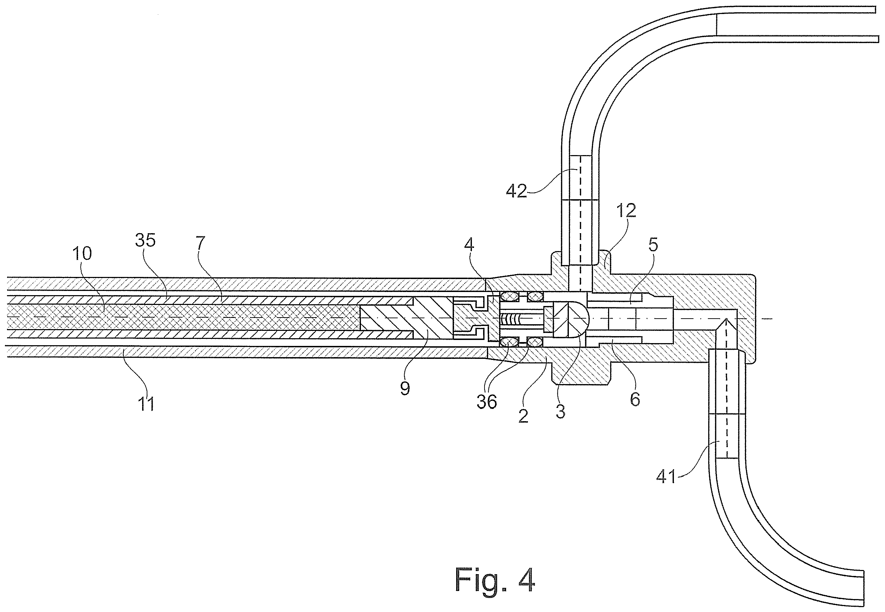

Im Folgenden wird die Erfindung anhand eines bevorzugten Ausführungsbeispiels weiter erläutert. Alle Figuren zeigen dasselbe Absperrventil einer Anlage zur Speicherung von kondensiertem Gas eines Kraftfahrzeugs mit einem elektromagnetischen Aktuator gemäß der Erfindung. Figur 1 zeigt das Absperrventil mit Aktuator, Isoliereinrichtung und Ventilstück, verkleinert im Längsschnitt. Die Figuren 2 bis 4 sind Teilvergrößerungen aus Figur 1, wobei Figur 2 im wesentlichen den Aktuator am einen Ende des Absperrventils zeigt, Figur 3 das an den Aktuator anschließende Teilstück, als Adapterstück bezeichnet, mit der Abdichtung gegen das kryogene Medium und Figur 4 das Ventilstück am anderen Ende des Absperrventils.

In einem nicht gezeichneten Kraftfahrzeug ist ein nicht gezeichneter Kryotank zur Hochdruckspeicherung von Wasserstoff eingebaut. Dieser dient als Kraftstoff zur Versorgung einer das Kraftfahrzeug antreibenden, nicht gezeichneten, Brennkraftmaschine. Der Wasserstoff liegt im Kryotank in einem Aggregatzustand, in überkritischer Form vor. Eine nicht gezeichnete Entnahmeeinrichtung für Wasserstoff ist in den Kryotank eingebaut, diese versorgt über zwei nicht gezeichnete Entnahmeleitungen die Brennkraftmaschine mit Wasserstoff.

Jede der Entnahmeleitungen ist tanknah mit einem in den Figuren 1 bis 4 gezeichneten, durch einen elektromagnetischen Aktuator 14 betätigbaren Absperrventil 1 versehen. Zusätzlich wird die Entnahmeeinrichtung über die Entnahmeleitungen auch zum Befüllen des Behälters mit kryogen gespeichertem Kraftstoff benutzt.

Für das Befüllen des Kryotanks mit Wasserstoff oder die Entnahme von Wasserstoff aus diesem muss mindestens ein Absperrventil 1 geöffnet werden. Dafür wird dessen elektromagnetischer Aktuator 14 bestromt und der eigentliche Betankungsvorgang oder die Entnahme kann durchgeführt werden.

Ein solches Absperrventil 1 ist sowohl in einer Entnahmeeinrichtung als auch in einer Befülleinrichtung für kryogen gespeicherten Kraftstoff verwendbar. Des Weiteren kann eine solche Einrichtung auch beide Funktionen erfüllen. Vorteilhafterweise kann sich bei einem Kryotank, der als zweischaliger Vakuumbehälter ausgebildet ist, das Absperrventil 1 zwischen dem Außen- und dem Innenbehälter im Bereich der Vakuumisolation befinden, insbesondere zum Beispiel über eine angeschweißte Haltevorrichtung in einen Außenbehälter 57 eingesetzt und dort befestigt. Das Absperrventil 1 kann auch an beiden Behältern angeschweißt bzw. andersartig befestigt sein. Innen am Außenbehälter und außen am Innenbehälter. In allen Fällen ist eine solche Bauweise auf jeden Fall günstig fürs Package des Kraftfahrzeugs, das Absperrventil 1 benötigt nämlich für sich keinen extra zu reservierenden Bauraum.

Außerdem ist das Absperrventil 1 dadurch möglichst tanknah untergebracht, mit dem Vorteil, dass in einer sicherheitskritischen Lage die Wasserstoffentnahme direkt am Kryotank selbst gesperrt werden kann und nicht eine vom Kryotank entfernte Leitung gesperrt wird. Es kann zwischen Kryotank und Absperrventil so vorteilhafterweise kein Bruch der Entnahme-/Befüllleitung auftreten.

Die Figuren 1 bis 4 zeigen das Absperrventil 1. Es besteht aus einem Ventilgehäuse 2 mit komplett demontierbaren Ventileinsätzen einschließlich einer verdrehbaren Kugel 3 als Dichtungskörper, einem Ventilkolben 4, einem Ventilsitz 5 mit statischer Sitzdichtung 6, einer Koppelstange 7 mit einem oberen und einem unteren Druckstück 8, 9, sowie Isolierstücken 10, 35 aus Teflon in und um die Koppelstange 7 des Absperrventils 1, welche ein freies Volumen innerhalb des Absperrventils 1 reduzieren, um den Wärmeeintrag in das kryogene Fluid zu reduzieren, sowie die Koppelstange 7 führen. Das obere Ventilgehäuse 12', als Teil des Gehäuses 2, ist mit einem Ventilrohr 11 verbunden und dieses wiederum mit dem unteren Ventilgehäuse 12, das die eigentliche kryogene Ventileinheit enthält. Das obere Ventilgehäuse 12' ist mit einer Wand 13 einer Vakuumhülle, welche das Absperrventil 1 umgibt und gegen die Umgebung isoliert, verbunden.

Eine Ankerspindel 19 und die Koppelstange 7 können hohe Ventilkräfte auf den Ventilkolben 4 übertragen, weil der innere Teflon-Isolator 10 auch als Stütze gegen Knicken der Koppelstange 7 wirkt. Durch eine nicht starre Verbindung zwischen unterem Druckstück 9 der Koppelstange 7 und dem Ventilkolben 4, welcher sehr genau durch zwei Gleitringe 36 im unteren Ventilgehäuse 12 geführt wird, wirken sich Achsversatz und Winkeltoleranzen von Koppelstange 7 und Ventilkolben 4 nicht wesentlich auf die Dichtfläche aus, zum Beispiel in Form einer ungleichmäßigen Einprägung.

Ein elektromagnetischer Aktuator 14 sitzt außerhalb der Vakuumhülle und ist mittels eines Adapterstücks 15, welches auf der Seite zum Aktuator 14 einen Flansch 16 aufweist mit dem Absperrventil 1 verbunden. In diesem Adapterstück 15 ist eine dynamische Abdichtung bestehend aus einer doppelten O-Ring-/Stützringabdichtung 52, 53 integriert.

Der rein elektromagnetische Antrieb des Absperrventils 1 ist ein Doppelspulen-Permanentmagnet-Aktuator 14. Die Schließkraft für das Absperrventil 1 wird in diesem Fall nicht von einer Feder, sondern von einem in den Aktuator 14 integrierten Schließelement, einem Permanentmagneten 18, zum Beispiel aus Neodym (NdFeB mit Beschichtung), aufgebracht und mittels einer Ankerspindel 19, einer Aktuatorspindel 20 und der Koppelstange 7 auf den Ventilsitz 5 übertragen. Der Permanentmagnet 18 ist zwischen zwei Ankerplatten 21a, 21b aufgenommen und mit diesen auf der in Gleitlagerbuchsen 22 geführten Ankerspindel 19 montiert. Ein oberes und ein unteres Magnetgehäuse 23, 24 nimmt je eine Spule auf, eine so genannte Haltespule 25 im oberen Magnetgehäuse 23 und eine so genannte Kompensationsspule 26 im unteren Magnetgehäuse 24. Dazwischen ist ein Polring 27 platziert. Magnetgehäuse 23, 24, Polring 27 und Ankerplatten 21 bestehen aus magnetisierbarem Material. Weiterhin enthält der Aktuator 14 eine pneumatische Dämpfungseinrichtung, aus einem am Ende der Ankerspindel 19 befestigten, zum Gehäuse 33 des Aktuators 14 hin offenen, topfartigen Kolben 28. Durch Luftkompression gegenüber dem Gehäuse 33 werden die Kraftstöße, die beim Schalten des Absperrventils 1 entstehen, reduziert.

Außen am Gehäuse 33 des elektromagnetischen Aktuators 14 ist ein Verbindungselement 34 für den elektrischen Stromanschluss angebracht. Das Funktionsprinzip des Aktuators 14 ist folgendermaßen zu beschreiben:
Das Magnetfeld des Permanentmagneten 18 läuft im geschlossenen Zustand des Absperrventils 1 hauptsächlich über die untere Ankerplatte 21b, das untere Magnetgehäuse 24, über den Polring 27 auf die obere Ankerplatte 21a. Über die Höhe einer Abstimmscheibe 29 zwischen Flansch 16 und Aktuator 14 wird dieser bei der Montage so vorgespannt, dass ein kleiner Luftspalt von ca. 0,1 bis 0,2 mm zwischen unterer Ankerplatte 21b und unterem Magnetgehäuse 24 bleibt. Das Magnetfeld des Permanentmagneten 18 versucht, den oben beschriebenen Ringschluss mit Kontakt zwischen unterer Ankerplatte 21b und unterem Magnetgehäuse 24 herzustellen und erzeugt somit eine Kraft in Richtung Ventilsitz 5. Mit dieser Konfiguration und der oben beschriebenen Vorspannung ergibt sich eine Anpresskraft der Kugel 3 auf den Ventilsitz 5 von ca. 1500 bis 1600 N.

Zum Öffnen des Absperrventils 1 werden im Normalfall beide Spulen 25, 26 zeitlich versetzt bestromt. Zuerst wird die Kompensationsspule 26 eingeschaltet. Diese wirkt dem Magnetfeld des Permanentmagneten 18 entgegen und verschiebt dieses in die untere Ankerplatte 21b, so dass das Spulenfeld hauptsächlich durch das untere Magnetgehäuse 24 fließt. Damit ist die Anziehungskraft zwischen Ankerplatten 21a, 21b und unterem Magnetgehäuse 24 so weit geschwächt, dass beim späteren Bestromen der Haltespule 25, bei weiterhin bestromter Kompensationsspule 26, die Ankerspindel 19 samt Ankerplatten 21a, 21b und Permanentmagnet 18 in Richtung Gehäusedeckel 34 bewegt wird und das Absperrventil 1 somit öffnet. Wenn die obere Ankerplatte 21a, wie in der Figur 2 dargestellt, am oberen Magnetgehäuse 23 anliegt, wird die Kompensationsspule 26 abgeschaltet und die Haltespule 25 auf einen schwächeren Haltestrom herunter geregelt. Der Luftspalt zwischen unterer Ankerplatte 21b und unterem Magnetgehäuse 24 ist nun groß genug, dass eine niedrige Halteleistung ausreicht, um das Absperrventil 1 sicher offen zu halten. Gleichzeitig ist dieser Luftspalt aber klein genug, dass noch genügend Restkraft durch das Permanentmagnetfeld 18 vorhanden ist, damit das Absperrventil 1 bei Abschalten des Haltespulenstroms aufgrund dieser Restkraft wieder schließt. Wird also bei Betriebsende die Haltespule 25 abgeschaltet, versucht das Magnetfeld des Permanentmagneten 18 den Ring über Ankerplatten 21a, 21b, unteres Magnetgehäuse 24 und Polring 27 wieder zu schließen und die Ankerspindel 19 bewegt sich vom Gehäusedeckel 34 weg und schließt das Absperrventil 1. Je kleiner dabei der verbleibende Luftspalt zwischen unterer Ankerplatte 21b und unterem Magnetgehäuse 24 wird, desto größer wird die Magnetkraft.

Das Verschlussorgan des Absperrventils 1 ist, wie alle weiteren Elemente des unteren Ventilgehäuses 12, zum Beispiel Einlass- und Auslasskanal 41, 42, sehr tiefen Temperaturen des kryogen gespeicherten Kraftstoffs ausgesetzt. Diese liegen bei bis zu -240 Grad Celsius. Der elektromagnetische Aktuator 14 sollte solch niedrigen Temperaturen nicht ausgesetzt werden, außerdem ist zur Minimierung des Wärmeeintrags eine Isolierung nötig, die die Wärmeübertragung vom Aktuator 14 auf das Ventilgehäuse 2 und sonstige Funktionsgruppen mindert. Daher ist die Schließbetätigungskraft übertragende Koppelstange 7 aus einem wärmeisolierenden Kunststoff ausgebildet. Außerhalb der Koppelstange 7, ist in den verbleibenden Raum im Mittelteil des einstückigen Ventilgehäuses 2, um die Koppelstange 7 herum, eine weiteren Wärmeübergang verhindernde Isoliereinrichtung, zum Beispiel aus den Kunststoffen PTFE oder PU, eingebracht. Dieser Isolationszylinder 35, ist auch so ausgebildet, dass das Ventilgehäuse 2 fast völlig mit Material ausgefüllt ist, was bewirkt, dass im Ventilgehäuse 2 so wenig wie möglich Freiraum mit Gas gefüllt ist.

Das Adapterstück 15 mit dem Flansch 16 ist gegenüber dem Ventilgehäuse 2 gasdicht abgedichtet und zwar sowohl zwischen zueinander beweglichen, als auch zwischen zueinander feststehenden Teilen. Durch jeweils zwei dynamische und zwei statische Abdichtungen wird mittels O-Ringen der gasbeaufschlagte Teil des Absperrventils 1 gasdicht gegenüber dem Aktuator 14 verschlossen. Dieses Prinzip der doppelten Abdichtung durch jeweils zwei Barrieren hat den Vorteil, dass im Zwischenraum zwischen erster und zweiter Dichtungsbarriere über eine Detektionsleitung 56 potentielle Leckagen sensiert und abgeleitet werden können.

Die erste und die zweite dynamische Abdichtung des Absperrventils 1 gegen Gasaustritt bestehen aus einem O-Ringen 50, 51 zwischen Flansch 16 und Aktuatorspindel 20, wobei bei der ersten dynamischen Abdichtung der O-Ring 50 noch durch einen Stützring 52 gegen Spaltextrusion gesichert ist. Die O-Ringe der beiden dynamischen Abdichtungen werden durch im Adapterstück 15 integrierte, die Aktuatorspindel 20 führende Gleitlagerbuchsen 53 gehalten. Die erste und die zweite Barriere der beiden statischen Abdichtungen bildet je ein O-Ring 54, 55 zwischen oberem Ventilgehäuse 12' und Adapterstück 15. Zwischen der jeweils ersten und zweiten Barriere der dynamischen und der statischen Abdichtungen wird durch eine Detektionsleitung 56 jeweils ein Hohlraum zwischen Aktuatorspindel 20 und Adapterstück 15 im Fall der beiden dynamischen Dichtungen und zwischen Adapterstück 15 und oberem Ventilgehäuse 12' im Fall der beiden statischen Dichtungen abgegriffen.

Die Abdichtungen sind im oberen Ventilgehäuse 12' platziert, welches keinen kryogenen Temperaturen ausgesetzt ist. Dafür ist das gesamte Ventilgehäuse 2 druckfest und einstückig ausgeführt. Das freie Volumen des Absperrventils 1 ist durch die beiden Isolierstücke 10, 35 in der Koppelstange 7und außen um die Koppelstange 7 herum auf ein Minimum reduziert. Der Durchmesser der Aktuatorspindel 20 ist so klein wie möglich gewählt, da deren Querschnittsfläche die Angriffsfläche für die resultierenden Druckkräfte darstellt, welche mit dem Quadrat des Durchmessers steigen und denen die dynamische Dichtung standhalten muss. Des Weiteren müssen diese auch vom Aktuator 14 überwunden werden. Dafür ist die Aktuatorspindel 20 aus einem hochfesten, wasserstoffbeständigen Werkstoff ausgeführt. Um die notwendige Dichtheit gegenüber großen Drücken zu erzielen und die großen Kräfte sicher zu übertragen, ist die Aktuatorspindel 20 über eine große Länge geführt, durch die zwei in das Adapterstück 15 integrierte Gleitlagerbuchsen 53. Des Weiteren sind glatte Oberflächen, sowohl auf der Aktuatorspindel 20, zum Beispiel feingedreht und poliert, als auch beim Adapterstück 15, in der Nut für die dynamische Dichtung, notwendig, um zuverlässige Dichtigkeit zu erzielen. Durch die Lage der dynamischen Abdichtung am "warmen" Ventilende sind keine kryogenen Dichtungsmaterialien, wie Faltenbälge, notwendig, es können Standardmaterialien für Hochdruck-Anwendung verwendet werden. Der Entfall von Faltenbälgen, die für Abdichtungen unter Kryo-Bedingungen üblich und notwendig wären, bedeutet deutlich geringere resultierende Druckkräfte, da die Wirkfläche von Faltenbälgen deutlich größer ist. Außerdem dass keine zusätzlichen Federsteifigkeiten des Balgs zu berücksichtigen sind, was eine geringere Leistung des Ventilantriebs ermöglicht und deutlich günstigere Fertigungskosten und eine längere Lebensdauer als bei einer geschweißten Faltenbalgeinheit.

## Patentansprüche

1. Absperrventil (1) mit einem Aktuator (14) zu dessen Betätigung für einen Behälter zur Speicherung von Kraftstoff als komprimiertes kryogenes oder kondensiertes Gas, insbesondere für einen Kryohochdrucktank, für einen mit kryogen gespeichertem Kraftstoff betreibbaren Verbraucher, insbesondere eine Brennkraftmaschine eines Kraftfahrzeugs, wobei der Behälter eine Entnahmeeinrichtung für den kryogen gespeicherten Kraftstoff besitzt, mindestens bestehend aus einer Entnahmeleitung mit dem Absperrventil (1), das ein kaltes (12) und ein warmes (12') Ventilgehäuse besitzt, wobei zwischen warmem (12') und kaltem (12) Ventilgehäuse ein Übergangsteil zum Wärmeabbau vorhanden ist und dass im warmen Ventilgehäuse (12') oder im Übergangsteil, am mit dem warmen Ventilgehäuse (12') verbundenen Ende, ein Adapterstück (15) eingefügt ist, das eine Dichtungseinrichtung enthält, die einen Gasaustritt vom kalten Ventilgehäuse (12) her in die Umgebung oder in den Aktuator verhindert, **dadurch gekennzeichnet, dass** die Dichtungseinrichtung aus je zwei statischen (54,55) und dynamischen (50,51) Abdichtungen mit dazwischen liegendem Hohlraum besteht.

2. Absperrventil (1) nach Anspruch 1, **dadurch gekennzeichnet, dass** die Dichtungseinrichtung Kunststoffdichtungen und/oder Gummidichtungen besitzt.

3. Absperrventil (1) nach Anspruch 2, **dadurch gekennzeichnet, dass** die Kunststoffdichtungen und/oder Gummidichtungen O-Ringe (50, 51, 54, 55) sind.

4. Absperrventil (1) nach einem der Ansprüche 1 bis 3, **dadurch gekennzeichnet, dass** der Hohlraum durch einen Sensor auf Gasdichtheit überwacht ist, indem Leckgas mittels einer Detektionsleitung aus dem Hohlraum heraus in einen auf Gaskonzentration überwachten Raum abgeführt wird.

5. Absperrventil (1) nach einem der Ansprüche 1 bis 4, **dadurch gekennzeichnet, dass** die erste und die zweite dynamische Abdichtung gegen Gasaustritt, bestehend aus O-Ringen (50, 51), zwischen dem Adapterstück (15) und einer Aktuatorspindel (20) eingebracht ist, wobei bei der ersten dynamischen Abdichtung der O-Ring (50) durch einen Stützring (52) und bei der zweiten dynamischen Abdichtung der O-Ring (51) durch eine Buchse (53a) gegen Spaltextrusion gesichert ist.

6. Absperrventil (1) nach Anspruch 5, **dadurch gekennzeichnet, dass** die O-Ringe (50, 51) der beiden dynamischen Abdichtungen zwischen zwei im Adapterstück (15) integrierte, die Aktuatorspindel (20) führende Gleitlagerbuchsen (53) eingebracht sind.

7. Absperrventil (1) nach einem der Ansprüche 1 bis 6, **dadurch gekennzeichnet, dass** die erste und die zweite statische Abdichtung gegen Gasaustritt, insbesondere bestehend aus jeweils einem O-Ring (54, 55), zwischen dem warmen Ventilgehäuse (12') und dem Adapterstück (15) eingebracht ist.

8. Absperrventil (1) nach einem der Ansprüche 5 bis 7, **dadurch gekennzeichnet, dass** zwischen einer jeweils ersten und zweiten Barriere der dynamischen und der statischen Abdichtungen durch eine Detektionsleitung (56) jeweils ein Hohlraum, zwischen Aktuatorspindel (20) und Adapterstück (15), im Fall der beiden dynamischen Dichtungen und zwischen Adapterstück (15) und warmem Ventilgehäuse (12'), im Fall der beiden statischen Abdichtungen, abgegriffen wird.

9. Absperrventil (1) nach einem der Ansprüche 1 bis 8, **dadurch gekennzeichnet, dass** dieses ein Verschlussorgan (3) mit räumlich runder Oberfläche, insbesondere kugelförmiger Oberfläche, besitzt, das so gegen einen Öffnungsquerschnitt eines rohrförmigen Ventilsitzes (6) in Fortsetzung eines Einlasskanals (41) für kryogen gespeicherten Kraftstoff gepresst wird, dass eine zu einem Auslasskanal (42) hin gas- und flüssigkeitsdichte Verbindung zwischen Verschlussorgan und rohrförmigem Ventilsitz (6) aufrechterhalten wird.

10. Absperrventil (1) nach Anspruch 9, **dadurch**
**gekennzeichnet, dass** zwischen Aktuatorspindel (20) und Verschlussorgan ein mindestens Längskraft übertragendes inneres Rohr, insbesondere aus Kunststoff, als Koppelstange (7) eingebracht ist, das innen und außen eine Wärmeübergang verhindernde Isoliereinrichtung (10, 35) besitzt.

11. Absperrventil (1) nach Anspruch 10, **dadurch gekennzeichnet, dass** die vom Aktuator (14) auf die Koppelstange (7) Kraft übertragende Aktuatorspindel (20) aus einer hochfesten Legierung, insbesondere einer Nickel-Basislegierung, zum Beispiel Inconel 718, besteht.

## Claims

1. A shut-off valve (1) with an actuator (14) for actuation thereof, said valve being intended for a container for storing fuel in the form of compressed cryogenic or condensed gas, more especially for a highpressure cryotank, for a load that can be operated with cryogenically stored fuel, more especially an internal combustion engine of a motor vehicle, wherein the container has a removal device for the cryogenically stored fuel, at least comprising a removal line with the shut-off valve (1), which has a cold valve housing (12) and a warm valve housing (12'), wherein a transition part for heat dissipation is provided between the warm valve housing (12') and cold valve housing (12), and in that an adapter piece (15) is inserted in the warm valve housing (12') or in the transition part, at the end connected to the warm valve housing (12'), and contains a sealing device which prevents an escape of gas from the cold valve housing (12) into the surrounding environment or into the actuator, **characterised in that** the sealing device comprises two static seals (54, 55) and two dynamic seals (50, 51) with a void therebetween.

2. A shut-off valve (1) according to claim 1, **characterised in that** the sealing device has plastic seals and/or rubber seals.

3. A shut-off valve (1) according to claim 2, **characterised in that** the plastic seals and/or rubber seals are O-rings (50, 51, 54, 55).

4. A shut-off valve (1) according to any one of claims 1 to 3, **characterised in that** the void is monitored for gas tightness by a sensor by guiding leaked gas, by means of a detection line, away from the void and into a space monitored for gas concentration.

5. A shut-off valve (1) according to any one of claims 1 to 4, **characterised in that** the first and the second dynamic seal sealing against an escape of gas and comprising O-rings (50, 51) are introduced between an adapter piece (15) and an actuator spindle (20), wherein in the case of the first dynamic seal the O-ring (50) is secured against gap extrusion by a support ring (52), and in the case of the second dynamic seal the O-ring (51) is secured against gap extrusion by a bushing (53a).

6. A shut-off valve (1) according to claim 5, **characterised in that** the O-rings (50, 51) of the two dynamic seals are introduced between two plain bearing bushes (53) which are integrated in the adapter piece (15) and guide the actuator spindle (20).

7. A shut-off valve (1) according to any one of claims 1 to 6, **characterised in that** the first and the second static seal sealing against an escape of gas, more especially each comprising an O-ring (54, 55), are introduced between the warm valve housing (12') and the adapter piece (15).

8. A shut-off valve (1) according to any one of claims 5 to 7, **characterised in that** between a first and second barrier of each of the dynamic and static seals, a void is tapped by means of a detection line (56), more especially between the actuator spindle (20) and adapter piece (15) in the case of the two dynamic seals, and between the adapter piece (15) and warm valve housing (12') in the case of the two static seals.

9. A shut-off valve (1) according to any one of claims 1 to 8, **characterised in that** this valve has a closure member (3) with a three-dimensionally round surface, more especially a spherical surface, which closure member is pressed against an opening cross section of a tubular valve seat (6) in continuation of an inlet channel (41) for cryogenically stored fuel, such that a connection, which is gas-tight and liquid-tight toward an outlet channel (42), between the closure member and tubular valve-seat (6) is maintained.

10. A shut-off valve (1) according to claim 9, **characterised in that** an inner tube transmitting at least longitudinal force and more especially made of plastic is introduced in the form of a coupling rod (7) between the actuator spindle (20) and closure member and internally and externally has an insulation means (10, 35) preventing transfer of heat.

11. A shut-off valve (1) according to claim 10, **characterised in that** the actuator spindle (20) transmitting force from the actuator (14) to the coupling rod (7) comprises a high-strength alloy, more especially a nickel-based alloy, for example Inconel 718.

## Revendications

1. Soupape d'arrêt (1) comprenant un actionneur (14) permettant son actionnement destiné à un réservoir de stockage de carburant sous la forme de gaz cryogénique comprimé ou condensé, en particulier pour un réservoir cryogénique haute pression, destiné à un consommateur pouvant être actionné par du carburant stocké sous forme cryogénique, en particulier un moteur à combustion interne d'un véhicule, le réservoir comprenant un dispositif de prélèvement du carburant stocké sous forme cryogénique, constitué d'au moins une conduite de prélèvement équipée de la soupape d'arrêt (1) qui comporte un boîtier de soupape froid (12) et un boîtier de soupape chaud (12'), entre le boîtier de soupape chaud (12') et le boîtier de soupape froid (12) étant prévu une partie de transition pour permettre la dissipation de la chaleur, et, dans le boîtier de soupape chaud (12') ou dans la partie de transition, à son extrémité reliée au boîtier de soupape chaud (12') étant insérée une pièce d'adaptation (15) qui renferme un dispositif d'étanchéité qui empêche l'évacuation de gaz du boîtier de soupape froid (12) dans l'environnement ou dans l'actionneur,
**caractérisée en ce que**
le dispositif d'étanchéité est constitué par deux garnitures d'étanchéité respectivement statiques (54, 55) et dynamiques (50, 51) avec un volume creux situé entre celles-ci.

2. Soupape d'arrêt (1) conforme à la revendication 1,
**caractérisée en ce que**
le dispositif d'étanchéité comporte des garnitures d'étanchéité en matériau synthétique et/ou des garnitures d'étanchéité en caoutchouc.

3. Soupape d'arrêt (1) conforme à la revendication 2,
**caractérisée en ce que**
les garnitures d'étanchéité en matériau synthétique et/ou les garnitures d'étanchéité en caoutchouc sont des bagues toriques (50, 51, 54, 55).

4. Soupape d'arrêt (1) conforme à l'une des revendications 1 à 3, **caractérisée en ce que**
l'étanchéité au gaz le volume creux est surveillée par un capteur de sorte que le gaz de fuite soit évacué au moyen d'une conduite de détection, est surveillée du volume creux, dans une chambre dont la concentration en gaz.

5. Soupape d'arrêt (1) conforme à l'une des revendications 1 à 4,
**caractérisée en ce que**
la première garniture d'étanchéité dynamique et la seconde garniture d'étanchéité dynamique empêchant la sortie de gaz constituées par des bagues toriques (50, 51) sont insérées entre la pièce d'adaptation (15) et une broche d'actionneur (20), dans le cas de la première garniture d'étanchéité dynamique la bague torique (50) étant protégée contre l'extrusion de fission par une bague d'appui (52) et dans le cas de la seconde garniture d'étanchéité dynamique la bague torique (51) étant protégée contre l'extrusion de fission par une douille (53a).

6. Soupape d'arrêt (1) conforme à la revendication 5,
**caractérisée en ce que**
les bagues toriques (50, 51) des deux garnitures d'étanchéité dynamiques sont insérées entre deux douilles de palier lisses (53) intégrées dans la pièce d'adaptation (15) et guidant la broche d'actionneur (20).

7. Soupape d'arrêt (1) conforme à l'une des revendications 1 à 6,
**caractérisée en ce que**
la première garniture d'étanchéité statique et la seconde garniture d'étanchéité statique empêchant la sortie de gaz en particulier constituées chacune par une bague torique (54, 55) sont insérées entre le boîtier de soupape chaud (12') et la pièce d'adaptation (15).

8. Soupape d'arrêt (1) conforme à l'une des revendications 5 à 7,
**caractérisée en ce qu'**
entre la première barrière et la seconde barrière respectives des garnitures d'étanchéité dynamiques et des garnitures d'étanchéité statiques, est respectivement saisi par une conduite de détection (56) un volume creux situé entre la broche d'actionneur (20) et la pièce d'adaptation (15) dans le cas des deux garnitures d'étanchéité dynamiques et entre la pièce d'adaptation (15) et le boîtier de soupape chaud (12') dans le cas des deux garnitures d'étanchéité statiques.

9. Soupape d'arrêt (1) conforme à l'une des revendications 1 à 8,
**caractérisée en ce qu'**
elle comporte un organe de fermeture (3) ayant une surface tridimensionnelle arrondie, en particulier une surface en forme de sphère qui est comprimé contre la section d'ouverture d'un siège de soupape tubulaire (6) situé dans le prolongement d'un canal d'entrée (41) du carburant stocké de manière cryogénique de façon à conserver une liaison étanche aux gaz et aux liquides vers un canal de sortie (42) entre l'organe de fermeture et le siège de soupape tubulaire (6).

10. Soupape d'arrêt (1) conforme à la revendication 9,
**caractérisée en ce qu'**
entre la broche d'actionneur (20) et l'organe de fermeture est inséré un tube interne transmettent au moins les forces longitudinales, en particulier en matériau synthétique, sous la forme d'une tige d'accouplement (7) qui comporte à sa partie interne et à sa partie externe un dispositif isolant (10, 35) empêchant un transfert de chaleur.

11. Soupape d'arrêt (1) conforme à la revendication 10,
**caractérisée en ce que**
la broche d'actionneur (20) transmettant les forces de l'actionneur (14) à la tige d'accouplement (7) est réalisée en un alliage très solide, en particulier un alliage à base de nickel tel que de l'inconel 718.
